# EUROPEAN PATENT APPLICATION

(11) **EP 1 349 094 A1**
(43) Date of publication of application: **01.10.2003**
(21) Application number: 01982979.5
(22) Date of filing: 26.10.2001
(51) Int. Cl.: G06F 17/60, G07F 19/00

(54) **METHOD FOR EFFECTING CLEARING PAYMENT OF COMMODITIES (WORKS, SERVICES)BY MEANS OF ATMs**

(30) Priority: 09.12.2000 RU 2000130897
(71) Applicant: Joint Stock Company "General Technologies", Moskow, 123007 (RU)
(72) Inventor: CHERNOMOROV, Sergei, Ramenskoe, Moskovskaya obl., 140100 (RU); PAVLENKO, Sergei, Mozhaisky r-n, Moskovskaya obl., 143221 (RU)
(74) Representative: Zellentin, Rüdiger, Dr.
(86) International application number: RU0100448
(87) International publication number: WO02046998

(57) **Abstract**

The invention relates to clearing the payment of goods (works, services) by using a cash dispenser. The aim of the invention is to simplify for a buyer the payment of the good (work, service) chosen thereby, to perform said payment in real time and to increase the number of types of buyer accounts whose remainders can be used by the buyer for said payment. The inventive method consists in the following: a list of proposed goods (works, services) is recorded by a computer system of a processing centre, the buyer reads said list with the aid of the cash dispenser which serves the processing centre. The use of the cash dispenser for paying for the good (work, service) by the buyer is carried out with bankcard thereof.

## Description

### Field of the Invention

The invention relates to finance and can be applied for effecting a clearing payment of commodities (works, services) by means of ATMs.

### Background of the Invention

Automated teller machines, ATMs, being used in modern payment systems perform, as a rule, operations for dispensing and collecting cash, as well as providing statements of account for bank card holders. At the same time, various methods and systems assuming use of the ATMs for effecting a clearing payment of commodities (works, services) are known. For example, in the US Patent Nº 5987439 (Int. Cl. G 06 F 17/60, November 16, 1999) an automated banking system for performing changes on the card or account of the user is described Said document discloses an automated banking machine connected by the communication channel with the corresponding banking network. A user of this machine can perform operations which are typical for modem ATMs, and also a series of other operations including:
― transferring money to the account being obviously denoted by this user in some bank. In order to perform this operation the user types on a keyboard the name and code of this bank and also the name of holder and number of that account;
― paying bills for the utilities, for use of a credit card etc. In this case, the user inserts the bill on the paper carrier into the input slot of the optical scanner being provided in said machine. Then this bill is scanned from both sides, after which the obtained images are processed by the machine, with recognizing the requisite elements of payer of this account and of the company billed this bill, and also the sum of this bill.

In order to perform said non-typical operations, said machine is provided with the corresponding hardware and software. In so doing, the operation for writing off a corresponding sum from the credit card or from the bank account of this user is included into a number of methods for presenting the money by the user, which methods being necessary to carry out aforementioned operations are contemplated by said document. In the case of such writing off, as well as in other cases contemplated by the operating algorithm of said machine, a procedure for verifying the user's authority is performed, during which procedure the user, in accordance with the corresponding machine instruction, inserts his/her card into the input slot of the reading device and types his/her password on the keyboard of this machine, after which this password is verified by means of the aforementioned banking network.

In the context of the present invention, both above mentioned non-typical operations have certain disadvantages. Thus, if said user desiring to pay for the commodity (work, service) offered by some seller performs for this purpose a money transfer (without cash) to the bank account of this seller with the above described method, then, in this case, the user has no way to include the data about a purpose of these money into the parameters of this transfer, thereby not allowing, in its turn, said seller to determine the commodity (work, service) paid by this transfer of money. Moreover, aforementioned necessity for entering manually the requisite elements of the receiver of this transfer, first, forces the customer to remember these requisite elements or to carry them, and second, is a source of additional errors.

When desiring to embody the above described method for paying bills using typical modern ATM, a necessity appears to provide such ATM with a device non-typical for the ATM ― an optical scanner, as well as with a corresponding software, which is a disadvantage of this method. Moreover, since the sellers of commodities (works, services) do not mutually match the forms of bills presented to their clients, then, as a consequence, the bills from various sellers differ by a type, arrangement of the information significant for paying the bill, etc. This, in turn, leads to sophistication of the corresponding program for recognizing the bill content. In addition, errors are possible during the process of recognition of bill content with a printed text of poor quality, dirty or crumpled paper of the bill etc. And finally, said customer could pay for the commodity (work, service) by the given method only provided that the bill for payment of this commodity (work, service) was formed and given to the customer by the seller in advance. Consequently, according to this method it is not possible to make the payment of a commodity (work, service) on a transaction not being settled in advance.

In the US Patent Nº 5832460 (Int. Cl. G 06 F 17/60, November 3, 1998) a method and system for providing and paying bills are described. Said document assumes in this system the presence of electronic bill presenter being a subject connected by electronic communications to bill formers, bill payers and corresponding banks of bill formers and bill payers. The electronic bill presenter receives electronic bills from the formers, sorts these electronic bills according to payers, and then sends to every payer the electronic bills personally designated for that payer. Particular payer browses the received electronic bills on the screen of electronic device, the payer being able to use as said electronic device the following various devices: personal computer, phone with screen, ATM, Internet-terminal and other devices. Among said electronic bills, the payer selects those ones he/she desires to pay, after which he/she forms corresponding payment instructions and sends them within electronic payment orders to the electronic bill presenter. The electronic bill presenter after receiving said electronic payment order sorts the payment instructions contained in it according to the payer's banks indicated in these instructions, after which he/she sends to these banks in real time the corresponding messages, on which base these banks effect clearing payments to the banks of formers of corresponding electronic bills.

The described method of presenting and paying bills requires to perform mandatory said preliminary sorting of electronic bills received from various formers of these bills. Moreover, the described method, as well as the previously described method for paying bills by using automated banking machine, does not allow to effect the clearing payment of commodity (work, service) on a transaction not settled in advance, because within the limits of the described method it is necessary to have the electronic bill formed and given in advance to the customer. And finally, said system for presenting and paying bills requires to set communications with all other above listed participants of the system (and even communications allowing to transmit messages in real time with payers' banks), thereby making an embodiment of this system rather expensive and technically complicated.

The closest analog to the present invention is a method for effecting commercial transactions by effecting the clearing payment described in the article: http://www.regens.ru/pages/web_shopping.shtml. This method for effecting commercial transactions is realized as follows. The shop creates a Web-page in a computer connected to Internet, then places onto this Web-page a list of offered commodities or services, as well as rules for forming, paying and receiving the orders by the customers. The customer desiring to purchase a commodity or order a service by the method being disclosed enters Internet using the computer, opens the Web-page of the shop, selects a commodity (service) from said list, and forms an order indicating all personal information required by the shop. The data entered by the customer are then processed with a computer program of the shop. If there are no errors in entered data, said program assigns a number to this order and then sends to the customer's computer all essential parameters of this order including its cost and number. Then on the basis of corresponding instruction the customer's bank effects money transfer from the customer's account to the shop's account at the rate of the cost of the given order. After receiving this transfer the shop provides the ordered commodity (service) to the customer.

The described method for effecting commercial transactions has the following disadvantages. First, in order to pay for his/her order the customer should form and send a corresponding payment instruction to his/her bank separately from the procedure of ordering, which makes this method rather labor intensive in the case when this payment instruction being delivered to the bank by mail, courier, or the customer him/herself. If the customer's bank offers for its clients the system of remote control of the bank accounts (the so called system "client-bank"), then in this case the customer could decrease said labor intensity by forming and sending payment instruction to the bank by means of said system "client-bank", but in so doing the customer should pay for bank services on installing and maintaining this system. Second, the described method does not allow the customer to pay operatively his/her account at any time. The reason for this consists in the fact that banks receive the payment instructions of their clients for clearing, as a rule, only in defined hours during working day (even in the cases when the clients have a possibility to form and send payment instructions to the banks on a round-the-clock basis by corresponding systems "client-bank"), so the customer formed an order through Internet in the evening or on weekend would be able to pay for this order to his/her bank no earlier than the nearest working day. Third, the described method limits a customer in selecting types of bank accounts useful to pay for his/her order, since it does not assume a payment of the commodity (service) selected by the customer with the help of his/her bank card.

It is worthwhile to describe the last of listed disadvantages in more details. In modern payment systems in order to register operations cleared by bank card holders, the banks issuing these cards set up the so called special card accounts (SCA) for card holder. A typical agreement for attending such SCA allows to use the money placed on this SCA only for payment of operations cleared by SCA holder (i.e., by holder of corresponding bank card) when using his/her card and also for charging off the issuing bank fees associated with these operations. SCA could be entered by various methods including transferring money from other accounts of this SCA holder provided that according to banking rules the types of these accounts allow transferring money to SCA (such accounts include, for example, current and deposit accounts). In fact, in order to pay for his/her orders the customer could use money placed not only on SCA but also on his/her current and deposit accounts. On the contrary, when paying the orders according to above described method for effecting commercial transactions the customer could use for this purpose only the money placed on his/her current and deposit accounts. After spending all balances of these accounts the customer has no ability to enter any money to any of these accounts from his/her SCA due to above mentioned limitations on using the money placed on SCA.

Since "work" and "service" are commodities of specific type in economical sense, then hereinafter in the text of the present invention the term "commodity (work, service)" means a commodity, a work, and a service both separately and in any combination.

### Summary of the Invention

The problem of the present invention is to simplify a procedure of payment of the selected commodity (work, service) by the customer, to provide a possibility to effect said payment in real time, and also to increase the number of types of customer accounts which demand balances could be used by the customer for this payment.

The set problem is solved by that in a method for effecting the clearing payment of commodities (works, services), the method being effected within a payment system comprising at least one processing center and one or more ATMs, wherein a list of commodities (works, services) offered by the seller is placed in a computer system of the processing center, and the customers browse said list and effect the clearing payment of selected commodity (work, service) with the ATM using a bank card for said payment.

The distinction of the method according to the present invention is in that at least a price of this commodity (work, service) could be included into the parameters of at least one commodity (work, service).

One more distinction of the method according to the present invention is in that if, by the time of using said list by the customer, some commodity (work, service) has been already provided to this customer but still not paid by him/her, then in this case at least a total cost of this commodity (work, service) could be included into the parameters of this commodity (work, service).

One more distinction of the method according to the present invention is in that if, by the time of using said list by the customer, the customer has already made an order to said seller to provide a commodity (work, service) to the customer but still not paid by him/her, then in this case the parameters of this commodity (work, service) including at least the cost of this order and/or identifier of this order could be included into said list.

One more distinction of the method according to the present invention is in that prior to said payment of the commodity (work, service) by the customer, the order to the said seller to provide this commodity (work, service) to the customer could be formed and sent by the ATM to said processing center, and the receiving of said order could be confirmed by sending to said ATM a message with indication of parameters of this order including at least the cost of this order and/or identifier of this order.

One more distinction of the method according to the present invention is in that during said payment of the commodity (work, service) by the customer an authorization procedure for the sum of this payment could be effected.

One more distinction of the method according to the present invention is in that after said payment of the commodity (work, service) by the customer a reporting document about completed operation could be formed in the ATM for this customer.

Hereinafter in the text of present invention the term "commodity (work, service)" is replaced with the term "commodity" in order to simplify and shorten the description.

The method according to the present invention is embodied on the basis of a network of processing centers of a payment system that processes bank cards, at least one processing center being included into said network. Hereinafter in the present invention the term "processing system" means the payment system of any range - international, national, regional, local, or a combination of such payment systems.

### Detailed Description of the Invention

The method according to the present invention is embodied as follows. A seller desiring to sell his/her commodities according to this method forms a list of commodities offered by him/her, the list comprising at least identifiers of these commodities. Verbal names of the corresponding commodities, codes of these commodities according to seller's catalog etc. could be used as identifiers. Prices of all or several of these commodities could be primarily not included into said list. The reason for this could be, in particular, in seller's wish to calculate the price of particular commodity directly before payment of it by the customer if, according to seller's rules, this price depends either on the volume of purchase or is determined by current conditions of raffle for this commodity (for example, 10-percent discount for every 100^{th} customer). Also the seller could additionally include into said list other parameters of offered commodities, for example, the number of units off-the-shelf of corresponding commodities, conditions of their delivery (in particular, the cost of delivery depending on the delivery destination) etc. The seller places said list of commodities in the processing center of said payment system participating in embodying the method discussed (hereinafter this processing center will be named attending processing center). This placing is carried as follows. The seller forms an electronic message on the basis of said list and sends this message to attending processing center. In order to transmit this electronic message the seller could use any communication systems matched with attending processing center, for example, switched telephone network, Internet, data network according to the X.25 protocol etc. The seller could place said list of commodities both through direct interaction with the attending processing center and through agents. After receiving said list of commodities the attending processing center enters the elements of this list into a database of its computer system. In addition, the seller reports to this attending processing center the requisite elements of his/her bank account for payment of commodities from said list. If, within the limits of the method discussed, the attending processing center interacts with several sellers in the same way, then this processing center also enters the lists of commodities received from them into the database, thereby forming the common list of commodities offered by all said sellers.

If some changes appear (for example, several units of some commodity was sold or, on the contrary, became available for purchase) in the list of commodities offered by any one of said sellers, then this seller immediately sends said changes by above described method to the attending processing center, which, in turn, enters these changes to the list of commodities stored in said database.

The customer desiring to pay for this commodity by the discussed method uses for this purpose one of ATMs connected to the attending processing center. First of all, the customer identifies him/herself by inserting his/her bank card into input slot of card reading device of this ATM, and then typing on the keyboard of this ATM his/her Personal Identification Number (PIN) assigned to the customer by the bank issued this card. ATM reads off form the customer's bank card the information including at least the number and expiry date of this card, and also the name and surname of its holder. Further, if an immediate check of the validity of the bank card and PIN of the customer is predefined in the ATM operation program within the limits of the discussed method, then ATM forms and sends by means of a corresponding communication channel to the attending processing center an identification request being a typical identification request of the payment system but with an indication of the zero sum of operation in it. In particular, this identification request includes the information read from the bank card of the holder, and also the so called PIN-block being a certain number calculated by ATM on the basis of the customer's PIN according to a cryptographic algorithm accepted in the given payment system (in modern payment systems PINs of card holders are not transmitted via communication networks in an open form). The identification request received from ATM (i.e., the authorization request with the zero sum) is attended by said processing center in the order typical for modern payment systems: by the number of the bank card reported in this identification report the bank issued this card is determined, as well as a corresponding processing center (further named as the processing center of issuer) storing in its database the data about this card and its holder is determined, after which said identification request is sent by the attending processing center via the communication network of this payment system to the processing center of issuer. The latter on the basis of information contained in the received communication request checks the validity of indicated card and PIN, and then sends a corresponding response to the attending processing center, which, in turn, sends this response to the ATM. If ATM receives a negative response to its identification request (i.e., indicated card and/or PIN being invalid, or the card being blocked etc.), then, depending on the content of the response, the ATM either returns said card to the customer ejecting it from the input slot of said card reading device, or withdraws this card from the customer throwing it off to a cassette intended for that and mounted inside this ATM. Any of said actions is accompanied by outputting the corresponding message on the display screen of this ATM.

In the case of receiving by the ATM a positive response for said identification request, or in the case when this identification response was not formed by the ATM on this stage, the ATM outputs to the display screen a list of operation types offered to the customer, the list containing, besides operations typical for ATM of given payment system (dispensing cash, obtaining a report on the SCA etc.), an operation of effecting the clearing payment. After selecting this list item by the customer the ATM forms and sends to the attending processing center a request for providing a list of offered commodities. After receiving this request the attending processing center reads out said list of commodities from its database and sends it to the ATM for outputting on the display screen.

Various variants of visual arrangement of this list are possible when outputting it on the display screen of the ATM. For example, if said list contains the commodities proposed only by one seller, then while displaying this list the screen could be divided into two parts: fixed and scrollable. In the fixed part of the screen at least the seller's name is displayed, and also the requisite elements of bank account of this seller for payment of commodities from said list, contact information of the seller (phone and/or fax numbers, e-mail, URL of Web-page etc.) and other data of this seller could be displayed. Furthermore, an information necessary for the customer to work with said list and to pay for the selected commodity could be displayed in the fixed part of the screen. Correspondingly, said list of commodities is displayed in the scrollable part of the screen. Every row in this list contains parameters of particular commodity, for example, identifier, price, number of items of this commodity off-the-shelf etc. In this case, as it was mentioned above, only the identifier of the commodity is compulsory presented within these parameters. If a selection of some commodity by the customer supposes an indication of the amount of this commodity (volume of work or service), then in the row for this commodity a corresponding place is allotted for entering and displaying this amount. In the case, when the list is not fully placed on the screen, the customer is given a possibility to scroll this list using the corresponding controls of ATM.

If said list contains commodities offered by several sellers, then the above described format of the row of this list could include also the name of the seller offering this commodity. And if some commodity is offered simultaneously by several sellers, then this commodity would be presented in said list by corresponding rows. In the case, when it is not possible to indicate the name of the seller within the row of commodity parameters (for example, due to deficiency of the place on the screen), then the given list could be outputted for the customer in two stages. After the customer selects an operation of effecting the clearing payment from said list of operation types, to the display screen is outputted only a list of sellers containing at least the names of these sellers. Also, for every seller the list of categories of commodities offered by this seller and above mentioned requisite elements of this seller (including requisite elements of his/her bank account) could be outputted. Furthermore, after the customer selects the particular seller from this list, a list of commodities offered only by this seller is outputted to the display screen and this list could be displayed in the above described format having fixed and scrollable parts.

More complicated methods of displaying said list of commodities on the display screen of ATM are possible. For example, said list could be outputted on the screen in three stages. In the first stage, the list of categories of commodities is outputted, for example: computers and office appliances, audio and video appliances, household appliances, cars and car spares, furniture, clothes and footwear, food, purchasing and booking tickets (airway, railway, theater, cinema, concert, sport contests etc.), telephone (cellular, paging etc.) services etc. Such method of outputting this list of commodities on the display screen assumes that the seller classifies by him/herself each of offered commodities into corresponding category, after which, when forming this list (or his/her part of this list) indicates this category within the parameters of this commodity. In the case of several sellers participating in embodying the method according to the present invention said list of categories of commodities is common for all said sellers. After the customer selects a category of commodities interesting him/her from said list of categories of commodities, the ATM outputs the part of said list of commodities containing only the commodities of this category on the display screen. Said part of the list could be displayed on the screen by any of two above described methods (i.e., in one or two stages).

After the ATM outputs said list of commodities on the display screen the customer browses this list using corresponding controls of ATM. As was mentioned above, said list of commodities could be updated in the database of the attending processing center in real time by initiative of said sellers. Moreover, if this processing center attends several ATMs simultaneously within the limits of the method according to the present invention, then after payment of any commodities in any of these ATMs said list of commodities is correspondingly corrected by the attended processing center. The attending processing center immediately sends corresponding changes of said list of commodities to all ATMs which, if necessary, correct images on display screens (a procedure of sending corresponding reports by the attending processing center to the sellers of these paid commodities is described below).

As browsing said list of commodities the customer signs commodities he/she is interested in. In the case where payment of any of these commodities assumes an indication of the required amount of this commodity the customer types on the keyboard of ATM a corresponding number. If the given processing center attends several ATMs simultaneously, and the process of selection of commodities by the customer by means of given ATM lasts for rather long time, then by the time the customer finished his/her selection the first of selected commodities could be already paid by other ATMs. In order to solve this problem in the method according to the present invention the following procedure could be embodied. As was mentioned above, the parameters of every commodity displayed on the display screen could include, among other things, the amount of this commodity off-the-shelf. The customer signing the next commodity for payment either indicates the required amount of this commodity or agrees with default quantity offered by the customer (also displayed on the screen). After that, the ATM displays this customer-defined amount of this commodity as reserved by this customer and also decreases the off-the-shelf amount of this commodity and updates it on the screen. Simultaneously, the ATM sends to the attending processing center a message including a reference to this commodity (for example, position of this commodity in said list of commodities) and a corresponding customer-defined amount of this commodity. After receiving this message the attending processing center, similarly with said ATM, transfers the customer-defined amount of this commodity from the "off-the-shelf" category to the "reserved by this customer" category. Moreover, the attending processing center retranslates said message to all other ATMs. These ATMs after receiving this message, similarly transfer the customer-defined amount of this commodity from the "off-the-shelf" category to the "reserved by this customer" category (for customers of these ATMs such reserving being looking like done by an unknown person). Correspondingly, when some amount of some commodity is selected (i.e., reserved) in any one of said other ATMs, then the information about it passes through the attending processing center in said order and reaches, among others, the given ATM which similarly transfers the indicated amount of this commodity from the "off-the-shelf" category to the "reserved by someone" category (relative to the given customer) in its memory unit and, if necessary, on the screen. Finally, the reserved amount of the commodity either would be paid by the corresponding customer or the customer would abandon this payment, and then this amount of indicated commodity would go back to the "off-the shelf" category.

After finishing the commodity selection, the customer reports it to the ATM by pressing a corresponding button of the keyboard of ATM. Once receiving this message, the ATM checks whether all the commodities selected by the customer comprise price in parameters being included in said list of commodities. If the price of any one of these commodities is absent (or this price is presented being accompanied with a special sign meaning that this price could not be displayed on the display screen of ATM due to the fact that it is preliminary and serves only as a basis for calculating the final price in real rime), then the ATM forms a corresponding request to the attending processing center. The order for processing said request by this processing center could be different. For example, in a presence of corresponding agreement between the seller of the signed commodity and the attending processing center, the latter retranslates said request to this seller in real time via the communication channel negotiated within the limits of said agreement. If necessary, the attending processing center includes into this retranslated request the necessary data about the customer, for example, the bank card number, name and surname. In response to said request, the seller reports the price of this commodity to this processing center. If real-time interaction mode between the seller and attending processing center is not envisaged, and said preliminary price is included into parameters of signed commodity, then this processing center calculates the final price of this commodity by itself according to algorithm agreed with the seller. For example, the attending processing center could calculate the final price depending on the indicated amount of this commodity or according to current conditions of raffle on this commodity (for example, 10-percent discount for every 100^{th} buyer of this commodity). Finally, the attending processing center reports to the ATM the price of the signed commodity obtained by one or another way.

Then, having the information on the price and amount of every one of commodities selected by the customer, the ATM calculates on their basis a total cost of these commodities and outputs it on the display screen. After this the customer makes the final decision about payment of these commodities with his/her bank card. Once making the decision to pay for these commodities, the customer reports it to the ATM by pressing the corresponding button on the keyboard of ATM, after which the ATM performs the above described procedure of identification of the customer (in the case where the ATM still not perform this procedure by this time).

If in the method according to the present invention the ATM operation program assumes besides performing said identification of the customer a step of checking his/her ability to pay before the payment of the commodities selected by the customer, then in this case the ATM forms and sends to the attending processing center the authorization request containing, as was mentioned above, the information read from the customer's bank card, and the PIN-block. The sum in this authorization request is equal to the total cost of the commodities selected by the customer. This authorization request is processed by the payment system according to the above described typical order, and since the sum of this request being not equal to zero said processing center of issuer, besides validity of the bank card and customer's PIN, checks also the customer's ability to pay, wherefore it compares the sum of this authorization request with the so called authorization balance of given bank card being a minimal sum of expenses the customer could carry out with this card. Evidently, in the case where the identification of the customer and check of his/her ability to pay are performed directly before payment of commodities selected by the customer, then both these procedures could be joined within the limits of the single processing of said authorization request. Since the sum of this request is not equal to zero, then, specifically, the insufficient ability of the customer to pay could be added to possible reasons of negative response of processing center of issuer to this authorization request, and in the case where namely this reason was reported in negative response of processing center of issuer the ATM outputs, on ejecting the customer's card from said card reading device, the corresponding message on the display screen, which message suggests the customer to repeat selecting of commodities for a lesser sum. If the processing center of issuer gives positive response to said authorization request, then the processing center of issuer is simultaneously decreases said authorization balance for the sum of this request.

In the case of receiving by the ATM the positive response on the authorization request, or in the case where this authorization request was not even formed by ATM but the step of identifying the customer (performed, in this case, by a separate procedure) was successful, then the ATM forms and sends to the attending processing center a message containing the list of commodities selected by the customer. Since both the ATM and attending processing center have said list of commodities, which includes the commodities selected by the customer, then in order to decrease the volume of said message (in order to minimize the traffic) it is sufficient to the ATM to indicate positions of these selected commodities in said list of commodities. When the customer indicates additionally the required amount of this commodity for any of these commodities, then the ATM includes into this message the amount of the commodity indicated by the customer.

Once receiving from the ATM said message containing the list of commodities selected by the customer, the attending processing center checks whether these commodities in amount indicated by the customer are present in said list of commodities stored in the database of this processing center (in the last moment some of these commodities could be sold by the sellers themselves or paid by other ATMs). If the amount indicated in this list of any of these commodities appears to be lesser than the customer has indicated, then the attending processing center informs the ATM about this, and the latter, in turn, outputs on the display screen the corresponding message in which it suggests to the customer to repeat the selection of commodities.

Where said checking of the presence of amount of commodities indicated by the customer in said list of commodities was performed successful, then the attending processing center forms and sends to said processing center of issuer an electronic file containing, besides others, the information read from the customer's bank card, the date and time of performing the above described operation in the given ATM, the identifier of this ATM in the payment system, the name of the seller and said requisite elements of his/her bank account, and also the sum of payment equal to the total cost of commodities selected by the customer. Said electronic file could also contain data about commodities selected by the customer and other envisaged information. This electronic file serves as a basis for transferring the sum indicated in it from the corresponding SCA of the customer in said issuing bank to the bank account of the seller. Said transfer is effected as follows. The electronic file sent by the attending processing center during its transmission via said communication network of the given payment system passes through a clearing center of this payment system, which center on the basis of data contained in this electronic file gives a prescription to the clearing bank of this payment system to transfer the sum indicated in this electronic file from a correspondent account of the issuing bank to a correspondent account of the seller's bank indicated among said requisite elements of bank account of this seller (both correspondent accounts were opened within their participating in this payment system). Once effecting the instruction of the clearing center, the clearing bank forms and sends respective reporting documents to both said banks. The issuing bank after receiving its reporting document refunds the sum of said transfer by charging it off from said SCA of the customer. Correspondingly, the seller's bank after receiving its reporting document enters the received sum to the bank account of the seller. In the case when the seller's bank is not a participant of the given payment system, then within the limits of the method according to the present invention the seller's bank could be represented in this payment system by any bank-participant of this payment system. In this case the clearing bank effects said transfer from the correspondent account of the issuing bank to the correspondent account of said bank-participant of this payment system, and it transfers, in turn, the corresponding sum to the seller's bank by the joint interbank clearing service.

In the case where the commodities offered by several sellers are included into the number of commodities selected by the customer, then the information included by the attending processing center into the electronic file being formed by it is divided into groups, one of which contains said information common for all sellers, that is: the information read from the customer's bank card, the date and time of performing the above described operation in the given ATM, the identifier of this ATM in the payment system, the sum of payment equal to the total cost of commodities selected by the customer. Each one of remaining groups contains the information related to the particular seller: the name of the seller and requisite elements of his/her bank account, the data about the commodities only of this seller (total cost and, possibly, the list of these commodities) among the whole number of commodities selected by the customer. Once receiving such electronic file, said clearing center gives prescriptions to the aforesaid clearing bank in a way similar to the above described separately for each of sellers indicated in this electronic file, and the sum of every such prescription is equal to the total cost of commodities of this seller indicated in the corresponding group of this electronic file. Then every one of said prescriptions is processed by the clearing bank separately in the above described way.

Simultaneously with transmitting said electronic file to the issuing bank, the attending processing center corrects said list of commodities stored in its database, and also informs every one of said sellers about payment of commodities of this seller selected by the customer. The attending processing center includes into every such notice the aforesaid personal data of the customer received by this processing center within said electronic file. Subsequently, the customer would be able to get commodity paid by him/her by presenting his/her identity card and said bank card to the corresponding seller. Also, the indicated notice allows the seller to avoid errors in registering sold commodities in the case when the seller uses simultaneously several ways of selling his/her commodities. Moreover, the indicated notice could serve as a basis for the seller to provide to the customer the selected (and actually paid by the latter) commodities without waiting for the corresponding money entering said bank account of the seller, due to -the fact that in this case the given payment system is a guarantee of receiving this money by the seller.

The method according to the present invention assumes the possibility of forming and issuing by the ATM a reporting document about the above described operation performed by the customer. Said reporting document contains the information allowing the customer to check subsequently the correctness of charging off the sum of this operation by the issuing bank from the corresponding SCA of the customer. In particular, this information could include: the number of said customer's bank card, the date and time of performing said operation by the customer, the identifier of this ATM in the payment system, the sum of operation (equal to the total cost of commodities selected by the customer). The format of said reporting document could also assume an indication of some data about the seller and the commodities selected by the customer.

An embodiment of the method according to the present invention is possible, which allows the seller to include into said list of commodities not only the commodities offered by this seller to every desiring person, but also the commodities being already provided by this seller to particular customers but still not paid by them. Thus, these customers by the time of using this list have possibility to select from this list the commodities that are already provided to them, in order to pay for those commodities by the method according to the present invention. In the given embodiment, the seller, when forming said list, includes at least the total cost of the commodity into the parameters of every such commodity, and also sends personal data of the customer to which this commodity was provided (for example, name and surname of this customer and the number of his/her bank card) in a defined format to the attending processing center. Additionally, the seller could include an information about place and/or time of providing this commodity to the customer (terms of finishing the work or effecting a service), about amount of provided commodity (volume of finished work or effected service) etc. into parameters of such commodity. In this case the parameters of remained commodities from the aforesaid list instead of the aforesaid personal data of the customer contain a special sign meaning that this commodities being offered to any desiring person. The seller receives said personal data from the customer in advance, for example, during providing said commodity to the customer. Correspondingly, when performing this operation by the customer in the ATM, this ATM includes said personal data of this customer into parameters of said request to the attending processing center to provide said list of commodities, which personal data being received by the ATM as a result of the above described identification of this customer (the customer should identify him/herself by those bank card which number he/she previously reported to the seller). As a response to said request the attending processing center sends the list of commodities to the ATM (which, in turn, outputs it to the display screen), the list containing both the commodities being offered to any desiring person and commodities provided namely to this customer.

By the way described it is convenient to pay, in particular, for various services, provided to the customer without prepayment, for example, utilities (i.e., provision of apartments, central heating, gas, hot and cold water), provision of electric power, telephone communication etc. This embodiment of the method according to the present invention could be described by the example of paying by the customer for utilities provided to him/her by corresponding utility service. By the defined day of every month said utility service in the above described way forms and sends to the attending processing center a list of utilities provided to its clients (including the given customer) during the previous calendar month. The utility service includes at least the name of utility and cost of this utility according to the tariffs of this service and also said personal data of the corresponding client pre-reported by this client to this service, into the parameters of each of said utilities. In addition to these parameters the following parameters could be included: the period of providing this utility, the beginning date of imposing a fine in the case of delayed payment of this utility, and also a rate of this fine etc. The customer being a client of said utility service and desiring to pay by the aforesaid ATM for utilities provided to him/her by this service according to the above described order, first, identifies him/herself with the help of said bank card and also selects an operation of the clearing payment. Then the ATM sends to the attending processing center the aforesaid request containing the personal data of the customer received as a result of said identification, which data are identical to the corresponding data pre-reported by this customer to the utility service. As a response to said request the attending processing center sends to the ATM a list of commodities including the commodities offered to every desiring person, and also all commodities provided to this customer (but still not paid by him/her) by this moment, including said utilities. After the ATM outputs said list of commodities on the display screen, the customer browses the list, finds said utilities in it and indicates all or a part of these utilities for further payment with his/her bank card. As it was mentioned above, said list of commodities could be displayed in various ways. If, for example, this list is displayed by the above described method in two stages, then on the first stage the customer selects said utility service from the list of sellers, and on the second stage he/she selects said utilities from the list of utilities offered by this service. If this list is displayed by the above described method in three stages, then on the first stage the customer selects said utilities from the list of categories of offered commodities, then on the second stage he/she selects said utility service, and finally, on the third stage he/she selects said utilities. Payment of the utilities selected by the customer is effected in above described way.

Another embodiment of the method according to the present invention is possible, which allows the seller to include into said list of commodities also the orders already received by this seller from particular customers but still not paid by them. Thus, these customers by the time of using this list have possibility to select from this list their orders in order to pay by the method according to the present invention. In the given embodiment, when forming said list the seller includes the parameters of every such order, comprising at least the cost of the order and/or identifier of the order, and also personal data of the customer from which this order has been received (for example, the name and surname of this customer and the number of his/her bank card). Furthermore, the seller could include an information about place and/or time of receiving the order by the seller, about content of this order and term of its executing by the seller, about term for the customer to pay for this order (on the contrary this order could be annulled by the seller) etc. into parameters of such order. The seller receives the indicated personal data from the customer in advance, for example, during receiving said order from the customer. Correspondingly, when effecting this operation in the ATM this ATM includes, as well as in the above described embodiment of the method according to the present invention, the aforesaid personal data of this customer into parameters of said request to the attending processing center to provide said list of commodities, which personal data being received by the ATM as a result of the above described identification of this customer (the customer should identify him/herself by those bank card which number he/she previously reported to the seller). As a response to that request the attending processing center sends the list of commodities to the ATM (which, in turn, outputs it to the display screen), the list containing, among others, the orders received namely from this customer.

The practical application of the described embodiment of the method according to the present invention could be illustrated by the example of payment of the order by the customer, which order has been done before that by phone. The customer when watching TV programs (listening to radio programs, reading newspapers etc.) acknowledges the possibility to purchase a certain commodity, which requires to be ordered previously by contacting the seller by phone. The customer contacts with the seller by phone, query the price and other parameters of said commodity, specifies the conditions of the oncoming purchase and sale transaction (for example, the cost of the future order, conditions of delivery of this commodity etc.) and after this forms his/her order. The customer reports the aforesaid personal data to the seller. In response the seller reports the term for the customer to pay for this order and other data about this order (for example, the identifier of the order). Just after receiving said order the seller forms and sends, in the above described way, the following parameters of said order to the attending processing center: the cost of this order and/or its identifier, as well as the personal data of the customer. Also, another data could be included into the parameters of this order: the content of the order, the term for executing it by the seller, the term for the customer to pay for this order etc. In order to pay for his/her order the customer uses the aforesaid ATM, and according to the above described order the customer first identifies him/herself with the help of the aforesaid bank card and then selects an operation of effecting the clearing payment. Then the ATM sends to the attending processing center the aforesaid request containing the personal data of the customer received as a result of said identification, which data are identical to the corresponding data reported by this customer to the seller when forming the order. In response to this request the attending processing center sends to the ATM a list of commodities including the commodities offered to every desiring person, and also all orders received by various sellers from this customer (but still not paid by him/her) by this moment including said order. After the ATM outputs said list of commodities on the display screen the customer browses the list and selects said order. The payment of this order by the customer is effected in the above described way.

One more embodiment of the method according to the present invention is possible wherein the customer, once selecting some commodity from the aforesaid list of commodities displayed on the display screen of ATM, immediately, by means of this ATM, forms and sends to the attending processing center a message containing an order for the seller of said commodity to provide this commodity to the customer. If necessary, the customer includes into this order a required amount of the commodity (volume of service) and other data. The ATM includes into said message the personal data of the customer received by the ATM as a result of above described identification of this customer. The attending processing centers retranslates this message in real time to the seller via the mentioned communication channel. On receiving and processing said order, the seller immediately forms and sends to the attending processing center a response message containing the parameters of this order defined by the seller including at least the cost of this order and/or identifier of this order. The seller could also include into these parameters the term of executing this order by him/her and other necessary data. When having a respective agreement between the seller and the attending processing center, the latter could (i.e. without said exchanging by messages with the seller) define the parameters of this order by itself. Finally, independently from the way of receiving the parameters of this order the attending processing center sends these parameters to the ATM, which, in turn, outputs them on the display screen.

Booking and payment for airway tickets by the customer could be an example of utilizing the method according to the present invention. In the above described way an airway company participating in the given embodiment sends a list of offered airway tickets (or current changes of this list) to the attending processing center, and the parameters of each airway ticket include the following: the direction, the number of flight, the air-route (in the case when the given flight is carried with intermediate stops), the date, time and place of departure, the class of service, the airway ticket price, the number of vacant seats for the given flight etc. The customer desiring to purchase the airway ticket identifies him/herself by means of the aforesaid ATM in the above described way and then selects an operation for effecting the clearing payment. Then the ATM sends to the attending processing center a request for providing said list of commodities. After receiving this list at the first stage the ATM outputs the list of categories of commodities contained in this list on the display screen. The customer selects from this list the purchase of airway tickets and then consequently (as ATM outputs the corresponding images onto the screen) selects the direction of the flight, indicates the desired date of the flight, and, finally, selects the ticket to the particular flight while possibly selecting a seat of desired class of service. When purchasing several airway tickets for the same flight (and the same class) the customer additionally indicates the desired amount of airway tickets. After finishing the selection of airway tickets the customer presses a corresponding button on the control panel of ATM. Then the ATM forms and sends to the attending processing center a corresponding message representing an order to purchase from the airway company the airway tickets selected by the customer with the indication of the corresponding amount of tickets. Moreover, the ATM includes into this message the personal data of the customer received by the ATM as a result of the aforesaid identification of the customer. On receiving said message the attending processing center, as was described above, either retranslates this message to the airway company in real time and then receives the parameters of this order from it, or receives this order by itself. As was mentioned, the parameters of this order include at least the cost of this order and/or the identifier of this order. The customer's payment of this order is effected in the above described way.

Hitherto, in the method according to the present invention was disclosed a participation of only one attending processing center. Correspondingly, the aforesaid list of commodities was stored in the database of this processing center, and moreover, copies of this list, when necessary, were loaded into one or more ATMs attended by the same processing center. In principle, it is possible in the method according to the present invention, that several attending processing centers participate in it, each of centers attends one or more ATMs correspondingly. Since every one of these processing centers has its own database, then several possible methods for storing said list of commodities in this set of said databases appear. In the first of these methods the aforesaid list of commodities is still stored only in one of the attending processing centers. In this case all lists of commodities or changes in these lists formed by sellers separately are sent to this processing center, and these lists or their changes could be sent by these sellers to this processing center both directly according to above described order and via other attending processing centers. Moreover, the requests on changing said list of commodities are sent to said attending processing center by the ATMs attended by this and other aforesaid attending processing centers. In turn, said attending processing center sends the messages about changes made in said list of commodities to said sellers and ATMs (both directly and via corresponding attending processing centers).

In the second one of the mentioned methods for storing the aforesaid list of commodities the same copy of this list is stored in databases of several attending processing centers (up to that all attending processing centers store the copy of this list in their databases). Every seller could send the list of his/her commodities or the changes of this list to every one of the attending processing centers, and this processing center retranslates this information to all attending processing centers storing the copy of said list of commodities, and also reflects this information in its copy of said list of commodities (in the case when this processing center also stores the copy of this list). Moreover, every attending processing center received a request from its ATM to change said list of commodities sends this request to all attending processing centers storing the copies of this list and also makes this change in its copy of said list (in the case where this processing center also stores the copy of this list). In turn, every attending processing center storing the copy of said list of commodities sends messages about changes made by it in its copy of this list to the sellers and ATMs (both to its ones and those being attended by processing centers not storing the copies of said list of commodities). In order for the sellers not to receive similar messages about changing said list simultaneously from several attending processing centers storing the copy of this list, the transmission of such messages to every particular seller is imposed on only one of these processing centers. Similarly, only one of the aforesaid processing centers can transmit said messages to a particular processing center not storing copies of said list of commodities to retranslate subsequently these messages to ATMs of this processing center. Despite the fact that in this method the flow of messages about changes in said list transmitted via attending processing centers storing the copies of this list increases in proportion to the number of these processing centers, the reliability of storing said list also increases in proportion to this number, since in the case when the copy of this list stored in one of these attending processing centers would be damages or lost completely, then this processing center could immediately obtain a new copy of this list from any one of other said processing centers.

Also, the third method for storing said list of commodities is possible. In this method also exist several attending processing centers. Every seller defines in advance to which of these processing centers he/she would send the list of his/her commodities and its all further changes (while the seller could send the lists containing different commodities to different attending processing center). Furthermore, in the course of time, this seller could change the attending processing center, but the main problem consists in that in every moment of time the parameters of every of commodities offered by this seller would be stored in the database only of one of attending processing centers. It is possible that some ones of attending processing centers would not store the lists of commodities in its databases at all but would only attend ATMs. Thus, in the present method said list of commodities is stored in a single copy being distributed between databases of the set of attending processing centers. Correspondingly, every seller exchanges with the messages relating to the changes in parameters of some of his/her commodities only with the corresponding attending processing center. Every ATM sends the next request for changing parameters of one of the commodities through its attending processing center to the attending processing center in the database of which the parameters about this commodity are stored. In turn, every one of attending processing centers storing the list of commodities sends the messages about changes made by it in parameters of one of these commodities to all other attending processing centers for further retranslating these messages to ATMs being attended by these processing centers. The reliability of storing said list of commodities in the given method is slightly higher than corresponding reliability of storing according to the first method due to the fact that despite storing said list only in single copy, in the given method the likelihood of full loss of this list decreases by distributing its storage: in the case of database crash of any one of attending processing centers only the part of said list which was stored namely in this database would be destroyed. At the same time, in the first method the database crash of attending processing center singly storing said list of commodities could lead to full loss of this list in the case of absence of its backup copy.

In order to provide the possibility to implement the method according to the present invention it is necessary to include into the software of computer system of attending processing center a set of functions for storing said list of commodities in the database of this computer system and for sending it to the ATM, for effecting the clearing payment of the commodity selected from said list by the customer by means of bank card of this customer on the basis of corresponding command of ATM being used by this customer. In addition, it is necessary to include into the software of ATM a set of functions for browsing said list of commodities on the display screen of this ATM, for forming and sending an instruction to the attending processing center for effecting the clearing payment of the commodity selected from said list by the customer by means of bank card of this customer.

In order to provide the above described possibility to calculate the total cost of the commodity selected by the customer, in the case where the seller did not include the price of this commodity into its parameters sent by the seller to the attending processing center, it is necessary to include additionally, into the software of ATM, functions for forming and sending the request to the attending processing center for determining the cost of said commodity, and it is necessary to include additionally, into the software of attending processing center, functions for forming and sending to the ATM a message containing the requested price of said commodity.

In order to provide a possibility to form the order by the customer in the above described way it is necessary to include additionally, into the software of ATM, functions for forming and sending to the attending processing center an order for the seller to provide to the customer the commodity selected by the customer from said list of commodities. In addition, it is necessary to include additionally, into the software of computer system of attending processing center, functions for forming and sending to the ATM a message about receiving said order with indication of parameters of this order in this message, including at least the cost of this order and/or the identifier of this order.

The above described invention allows, by way of providing the customer with the possibility to effect the clearing payments of commodities (works, services) with the help of his/her bank card via the ATM attended by the payment system, to simplify the procedure of payment by the customer for the commodity (work, service) selected by him/her, to provide the possibility to effect this payment in real time, and also to widen the number of types of customer's accounts, demand balances on which could be utilized by the customer for this payment.

## Claims

1. A method for effecting the clearing payment of commodities (works, services), the method being effected within a payment system comprising at least one processing center and one or more ATMs, wherein a list of commodities (works, services) offered by the seller is placed in a computer system of the processing center, and the customers browse said list and effect the clearing payment of selected commodity (work, service) with the ATM using a bank card for said payment.

2. The method according to claim 1, **characterized in that** at least a price of this commodity (work, service) is included into the parameters of at least one commodity (work, service).

3. The method according to claim 1, **characterized in that** if, by the time of using said list by the customer, some commodity (work, service) has been already provided to this customer but still not paid by him/her, then in this case at least a total cost of this commodity (work, service) could be included into the parameters of this commodity (work, service).

4. The method according to claim 1, **characterized in that** if, by the time of using said list by the customer, the customer has already made an order to said seller to provide a commodity (work, service) to the customer but still not paid by him/her, then in this case the parameters of this commodity (work, service) including at least the cost of this order and/or identifier of this order could be included into said list.

5. The method according to claim 1, **characterized in that** prior to said payment of the commodity (work, service) by the customer, the order to the said seller to provide this commodity (work, service) to the customer could be formed and sent by the ATM to said processing center, and the receiving of said order could be confirmed by sending to said ATM a message with indication of parameters of this order including at least the cost of this order and/or identifier of this order.

6. The method according to claim 1, **characterized in that** during said payment of the commodity (work, service) by the customer an authorization procedure for the sum of this payment is effected.

7. The method according to claim 1, **characterized in that** after said payment of the commodity (work, service) by the customer a reporting document about completed operation is formed in the ATM for this customer.
